# EUROPEAN PATENT SPECIFICATION

(11) **EP 2 243 621 B1**
(45) Date of publication and mention of the grant of the patent: **06.11.2013**
(21) Application number: 10156406.0
(22) Date of filing: 12.03.2010
(51) Int. Cl.: B28B 11/06, B29C 70/58, B29C 67/24, E01C 5/22, E01C 5/20, E01C 11/22

(54) **A slab and its method of manufacture**
Pflasterplatte und Verfahren zu deren Herstellung.
Dalle et son procédé de fabrication.

(30) Priority: 13.03.2009 GB 0904390
(43) Date of publication of application: 27.10.2010
(73) Proprietor: Potter, Mr Roy, St Leonards on Sea East Sussex TN38 8BH (GB)
(72) Inventor: Potter, Mr Roy, St Leonards on Sea East Sussex TN38 8BH (GB)
(74) Representative: Kirkham, Nicholas Andrew

(56) References cited:
- EP-A1- 0 398 023
- WO-A1-98/45546
- WO-A2-02/42561
- DE-A1- 3 909 169
- DE-A1- 19 519 314
- DE-U1- 29 711 268
- FR-A1- 2 637 636
- GB-A- 2 157 673
- GB-A- 2 463 680
- JP-A- 2002 256 680

## Description

The present invention relates to slabs. In particular, the present invention relates to paving slabs; more particularly resin-bound paving slabs.

Resin-bonded slabs formed from aggregate granules and resins are well known. For example, GB 1326006 describes slabs and tiles formed by bonding graded chippings or granules of predetermined size range of stone, glass or other material with a transparent synthetic resin within a suitable mould. The slab is formed by first forming a layer of synthetic resin in the base of the mould and allowing it to set before the stone chippings and additional resin, or a mixture of the two, are added to the mould and allowed to set. The chippings may be of granite, marble, coal, glass or other suitable materials and the first-formed resin layer can be subsequently removed by, for example, sandblasting to uncover the embedded surface of chippings, if desired.

US4085181 describes a method of making multiple resin-bonded slabs from a single mould. At least one surface of the mould is lined with a bonding material, typically a polyester or epoxy resin, before an aggregate is introduced into the mould and the interstices therebetween filled with more bonding material. The aggregate-resin mixture is then allowed to cure and harden to form a solid column. The column is removed from the mould and sliced into paving slabs.

Permeable slabs or paving elements comprising aggregates and resins are well known, for instance from documents GB 2157673 - A, DE 29711268U and WO 98/45546 - A.

Permeable slab elements comprising an aggregate ad resin, the slab comprising a matrix [" frame (2)"] are known from document WO 02/42561 - A.

However, these and other known resin-bonded slabs suffer a number of disadvantages, not least because the slabs tend to be difficult to secure to a surface due to the presence of the resinous bonding agent and its inert nature. Resin-bonded slabs also suffer the disadvantage that they are not permeable which means that surface water cannot drain through the slab to allow, for example, rain water to drain from a site covered by the slabs. This is especially problematic when these kind of slabs are used to cover large areas. The resultant lack of natural drainage can lead to pooling of surface water which is undesirable or, where the covered surface is located on a gradient, problems with run-off water occur in the surrounding area.

Therefore, it is desirable to provide a paving slab which does not suffer from at least some of these disadvantages.

According to a first aspect of the present invention, there is provided a resin-bound slab as defined in claim 1, the slab comprising an aggregate and a resin, wherein the slab is permeable and comprises a cavity in its bottom surface, and wherein the cavity includes a matrix.

Preferably, the matrix comprises a plurality of voids.

Suitably, the matrix is a grid insert. Preferably, the grid insert is formed from a plastics material.

Preferably, the grid insert has at least one peripheral flange. More preferably, the grid insert has a plurality of peripheral flanges.

Preferably, the matrix has inner walls defining the grid, and thus the plurality of voids, and includes a plurality of apertures which link adjacent voids.

Optionally, the slab further includes a non-slip upper surface. Suitably, the non-slip upper surface is a non-slip covering. Preferably, the non-slip covering is resin-bound sand or fine grit.

According to a second aspect of the present invention as defined in claim 9, there is provided a method of forming a permeable resin-bound slab comprising an aggregate and a resin, which further comprises a cavity in its bottom surface, wherein the cavity includes a matrix, wherein the method comprises the steps of
i) locating a matrix within in a mould;
ii) mixing an aggregate and suitable resin, to provide a resin-coated aggregate;
iii) pouring the resin-coated aggregate mix into the mould;
iv) floating the surface of the resin-coated aggregate mix, to spread the mix into the mould and provide a level upper surface;
v) curing; and
vi) removing the slab from the mould.

Preferred embodiments of the invention are defined in the dependent claims.

Preferably, the method further comprises a first step of applying a silicone or grease to the mould.

Preferably, the method further comprises a step of agitating the mould between the step of pouring the mix and the step of floating the upper surface of the mixture.

Suitably, the method further includes a step of adding a non-slip covering to the upper surface of the slab. Preferably, the non-slip covering is a fine particulate material such as sand or grit. Preferably, the non-slip covering is added prior to, or during the curing process. Suitably, the fine particulate material is applied using a compressed gas such as compressed air.

The matrix suitably comprises an upper surface having a plurality of walls depending therefrom, wherein the walls define a plurality of voids.

Preferably, at least some of the voids are formed as through-voids with the upper surface.

Preferably, the matrix includes peripheral engagement means. Suitably, the peripheral engagement means comprises a peripheral co-planar flange. Preferably, the peripheral engagement means further comprises a plurality of orthogonal flanges.

Preferably, at least some of the walls are formed with a wall aperture adjacent the upper surface and the upper surface is formed with corresponding apertures in communication with an adjacent wall aperture.

The above and other aspects of the invention will now be illustrated in further detail, by way of example only, with reference to the accompanying drawings in which:
- Figure 1: is a perspective view from the top and a first side of an embodiment of a slab according to the first aspect of the invention;
- Figure 2: is a bottom plan view of the embodiment of Figure 1;
- Figure 3: is a sectional side view of the embodiment of Figure 1;
- Figure 4: is a perspective view from the bottom and a first side of the embodiment of Figure 1;
- Figure 5: is an underside perspective view of a further embodiment of a matrix in accordance with the present invention; and
- Figure 6: is a top perspective view of the embodiment of Figure 5.

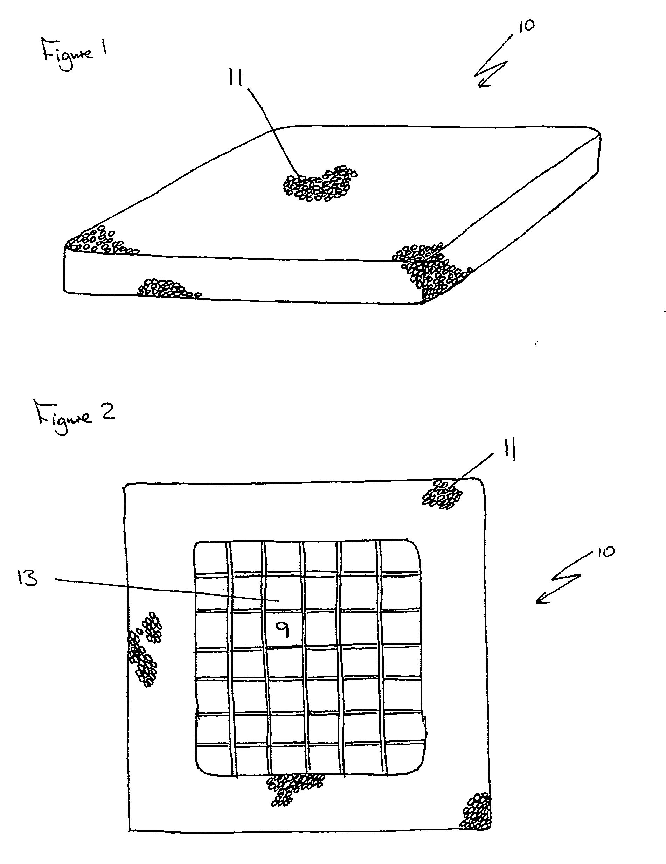

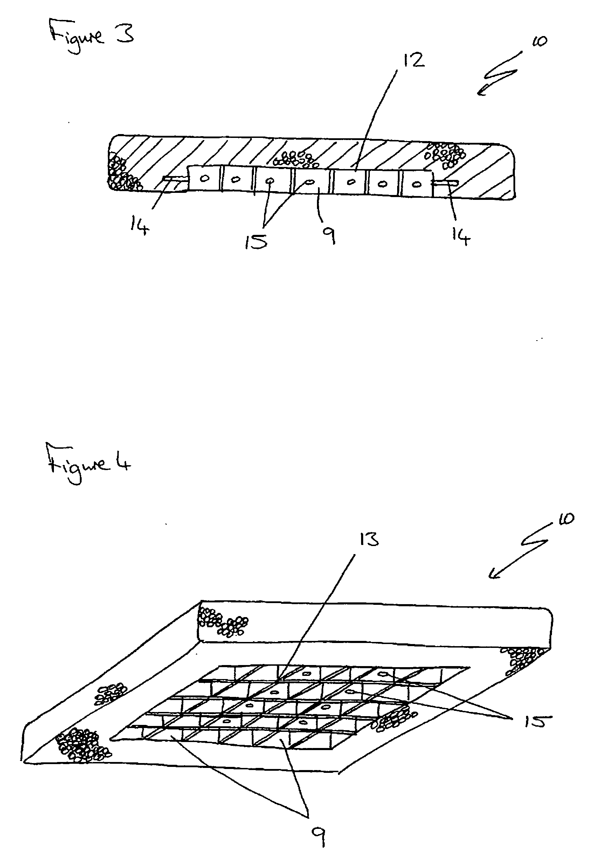

Referring to Figures 1 to 4, there is shown a slab 10 formed from aggregate granules 11 and a resin. The slab is generally square in shape and has a square cavity 12 in its underside. As shown in Figures 2 and 4, the cavity 12 includes a matrix generally in the form of grid 13, forming a plurality of voids 9. In the illustrated embodiment, grid 13 is embedded within the slab 10 by a co-planar peripheral flange 14 (see Figure 3) which extends perpendicularly from the outer edge of the matrix. In alternative embodiments, not shown, a series of smaller flanges which extend perpendicularly from the outer edge of the matrix are provided for the same purpose.

In preferred embodiments, the matrix is formed from a plastics material, suitably a recycled plastics material, further includes apertures 15 between at least some of the matrix voids 9. In alternative embodiments, not shown, the matrix is cast in-situ from the aggregate granule-resin mix and a suitably modified mould.

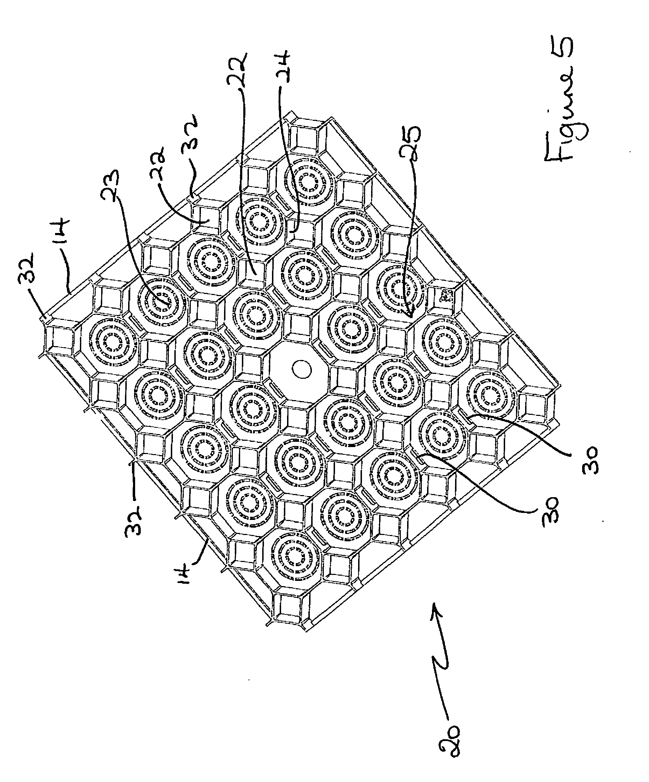

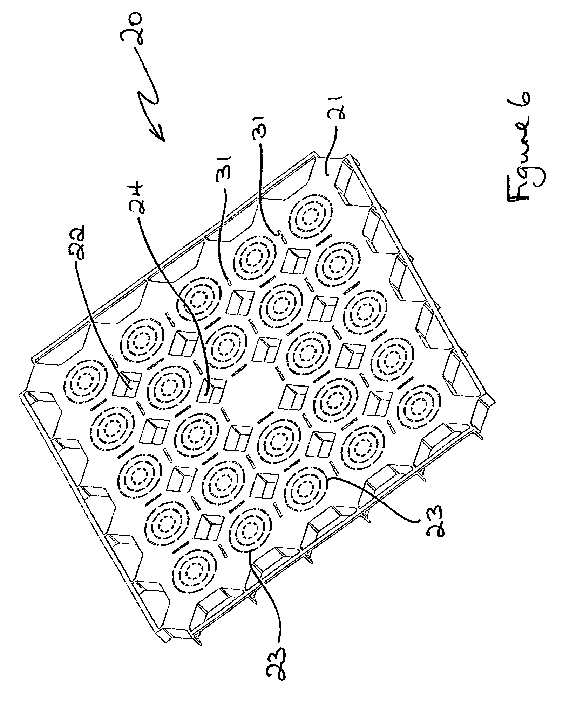

In the embodiment of Figures 1 to 4, the matrix is formed from a grid having square voids and a generally square structure. In alternative embodiments, not shown, the matrix has a generally circular shape, or a polygonal shape such as a hexagon or octagon. In further alternative embodiments, the voids are circular or polygonal, such as hexagonal, in cross-section (when viewed from below). Once such preferred matrix is shown in Figures 5 and 6.

In this embodiment, the matrix 20 has an upper surface 21 (Figure 6) which includes a plurality of apertures 22 and void perforations 23. Apertures 22 have side walls 24 depending from upper surface 21. In use, in the final slab, apertures 22 act as anchoring means allowing the slab material to pass through the apertures to bond the matrix to the body of the slab during manufacture. The filled apertures then also provide additional strengthening, particularly useful if the slab needs to be cut to fit a particular shape. Void perforations 23 allow for drainage of water through the slab.

In the embodiment shown, the voids 25 are formed as regular octagons such that apertures 22 are formed between diagonally adjacent voids 25.

Further apertures 30 are formed in the side walls of longitudinally and laterally adjacent voids 25 adjacent the upper surface 21. Apertures 30 are in communication with elongate apertures 31 formed in the upper surface 21 and provide a dual function. They allow transverse drainage between voids and also, if the slab is to be laid over concrete or on mortar pads, allow the pug or unset mortar to flow between voids through the apertures 30, 31 to anchor the slab further to the ground substrate.

In the embodiment shown in Figures 5 and 6, the co-planar peripheral flange 14 of the embodiment of Figures 1 to 4 is supplemented with a series of orthogonal flanges 32 to provide additional anchoring to the slab body.

In forming a slab in accordance with the present invention, suitable aggregate granules include, but are not limited to natural stone, granite or gravel aggregate granules, flints, bauxites/basalt, recycled glasses, brick and porcelain. The sizes of the aggregate granules will be graded according to the required properties, such as appearance permeability and strength, of the slab. Typical size gradings are 1-3mm, 3-6mm, and 6-10mm.

Suitable resins include, but are not limited to polyurethane and epoxy resins. Preferred resins are non-hazardous and are stable to ultra-violet light. This is important to prolong the lifetime of the slabs and prevent 'clouding' of the resin after long-term exposure of the slab and resin to the elements.

To ensure a high quality finish in the slab, prior to its casting, the aggregate granules undergo a two-stage washing and drying procedure. Subsequently, the aggregate granules are mixed with a specific predetermined amount of resin until the aggregate granules are suitably coated. The mix is then poured into a steel or silicon framed mould which has been coated with a non-stick silicone or grease. This ensures that the slab can be easily released from the mould when the resin has cured. Prior to the pouring of the mix, an appropriate matrix is located within the mould such that it will become embedded within the finished slab.

The exposed upper surface of the resin-coated aggregate mix within the mould is then floated-up to spread the mix into the mould and provide a level upper surface for the finished slab.

Alternatively, the mould may be shaken or vibrated to ensure a compact and uniform distribution of the aggregate granules throughout the slab and to increase density.

This also ensures that the slabs formed from a particular aggregate will have generally standardised characteristics such as strength and hardness. The resin and aggregate mix is then finally levelled and hand-floated to a specified desired finish, and left to cure and set. During this time, a non-slip coating may be applied to the upper surface of the slab. Suitable non-slip coatings include sand or fine grit.

In use, the slabs are located onto a firm and level base such as earth, compacted hardcore or levelled sharp sand in the manner of a conventional slab. The unique matrix in the underside of the slab allows the base material to enter the void, or series of voids, to securely fix the slab and prevent slippage. An especially secure fixing is provided when a mortar plug is used in conjunction with the slab.

Slabs of the present invention are hardwearing and durable, optionally include a non-slip finish and have a desirable overall appearance. Due to their permeability to rain and surface water, the slabs provide a sustainable drainage system which is ecologically and environmentally friendly. Even when installed of an impermeable base such as concrete or tarmac, the slabs of the present invention avoid the problems of run off, slowing and directing the flow of water. The matrix adds strength to the slab and to the installation as a whole. The matrix system facilitates a more secure foundation and fixing of the slab to the ground substrate which also further improves the permeability of the slab to rain and surface water.

## Claims

1. A resin-bound slab comprising an aggregate and a resin, wherein the slab is permeable and comprises a cavity in its bottom surface, and wherein the cavity includes a matrix.

2. A slab as claimed in claim 1, wherein the matrix comprises a plurality of voids.

3. A slab as claimed in claim 2, wherein the matrix is a grid insert.

4. A slab as claimed in any preceding claim wherein the matrix is formed from a plastics material.

5. A slab as claimed in any preceding claim wherein the matrix has at least one peripheral flange, preferably a plurality of peripheral flanges.

6. A slab as claimed in any preceding claim wherein the matrix is formed with inner walls defining a grid and thus a plurality of voids and further includes a plurality of apertures linking adjacent voids.

7. A slab as claimed in any preceding claim further comprising a non-slip upper surface, preferably a non-slip covering.

8. A slab as claimed in claim 7 wherein the non-slip covering is resin-bound sand or fine grit.

9. A method of forming a permeable resin-bound slab comprising an aggregate and a resin, which further comprises a cavity in its bottom surface, wherein the cavity includes a matrix, wherein the method comprises the steps of
vii) locating a matrix within in a mould;
viii) mixing an aggregate and suitable resin, to provide a resin-coated aggregate;
ix) pouring the resin-coated aggregate mix into the mould;
x) floating the surface of the resin-coated aggregate mix, to spread the mix into the mould and provide a level upper surface;
xi) curing; and
xii) removing the slab from the mould.

10. A method as claimed in claim 9 further comprising a step of adding a non-slip covering to the upper surface, preferably wherein the non-slip covering is a fine particulate material such as sand or grit.

## Patentansprüche

1. Harzgebundene Platte mit einem Aggregat und einem Harz, wobei die Platte durchlässig ist und in ihrer unteren Fläche eine Kavität aufweist, und wobei die Kavität eine Matrize umfasst.

2. Platte nach Anspruch 1, wobei die Matrize eine Vielzahl von Hohlräumen aufweist.

3. Platte nach Anspruch 2, wobei die Matrize ein Gittereinsatz ist.

4. Platte nach einem der vorhergehenden Ansprüche, wobei die Matrize aus einem Kunststoffmaterial ausgebildet ist.

5. Platte nach einem der vorhergehenden Ansprüche, wobei die Matrize mindestens einen Umfangsflansch, vorzugsweise eine Vielzahl von Umfangsflanschen, hat.

6. Platte nach einem der vorhergehenden Ansprüche, wobei die Matrize mit Innenwänden ausgebildet ist, die ein Gitter und somit eine Vielzahl von Hohlräumen definieren, und ferner eine Vielzahl von Öffnungen umfasst, die benachbarte Hohlräume miteinander verbinden.

7. Platte nach einem der vorhergehenden Ansprüche, ferner mit einer Antirutsch-Oberfläche, vorzugsweise einem Antirutsch-Belag.

8. Platte nach Anspruch 7, wobei die Antirutsch-Beschichtung harzgebundener Sand oder Feinkies ist.

9. Verfahren zum Ausbilden einer durchlässigen harzgebundenen Platte mit einem Aggregat und einem Harz, die ferner eine Kavität in ihrer unteren Fläche aufweist, wobei die Kavität eine Matrize umfasst, wobei das Verfahren die folgenden Schritte aufweist:
vii) Ansetzen einer Matrize innerhalb einer Form;
viii) Mischen eines Aggregats und eines geeigneten Harzes, um ein harzbeschichtetes Aggregat bereitzustellen;
ix) Gießen des harzbeschichteten Aggregatgemisches in die Form;
x) Ausschwimmen der Oberfläche des harzbeschichteten Aggregatgemisches, um das Gemisch in die Form zu verteilen und eine ebene Oberfläche bereitzustellen;
xi) Härten; und
xii) Entfernen der Platte von der Form.

10. Verfahren nach Anspruch 9, ferner mit einem Schritt eines Hinzufügens eines Antirutsch-Belags zu der Oberfläche, wobei vorzugsweise der Antirutsch-Belag ein Feinpartikelmaterial wie Sand oder Kies ist.

## Revendications

1. Dalle liée par une résine comprenant un agrégat et une résine, dans laquelle la dalle est perméable et comprend une cavité dans sa surface inférieure, et où la cavité comporte une matrice.

2. Dalle selon la revendication 1, dans laquelle la matrice comprend une pluralité d'espaces vides.

3. Dalle selon la revendication 2, dans laquelle la matrice est un insert de grille.

4. Dalle selon l'une des revendications précédentes, dans laquelle la matrice est formée à partir d'un matériau plastique.

5. Dalle selon l'une des revendications précédentes, dans laquelle la matrice présente au moins une bride périphérique, de préférence une pluralité de brides périphériques.

6. Dalle selon l'une des revendications précédentes, dans laquelle la matrice est formée avec des parois intérieures définissant une grille et donc une pluralité d'espaces vides et comporte en outre une pluralité d'ouvertures liant des espaces vides adjacents.

7. Dalle selon l'une des revendications précédentes, comprenant en outre une surface supérieure antidérapante, de préférence un revêtement antidérapant.

8. Dalle selon la revendication 7, dans laquelle le revêtement antidérapant est du sable ou des grains fins lié (s) par une résine.

9. Procédé destiné à former une dalle liée par une résine perméable comprenant un agrégat et une résine, qui comprend en outre une cavité dans sa surface inférieure, où la cavité comporte une matrice, où le procédé comprend les étapes consistant
vii) à placer une matrice dans un moule ;
viii) à mélanger un agrégat et une résine appropriée, afin de fournir un agrégat revêtu de résine ;
ix) à faire couler le mélange d'agrégat revêtu de résine dans le moule ;
x) à lisser la surface du mélange d'agrégat revêtu de résine, à étaler le mélange dans le moule et à fournir une surface supérieure horizontale ;
xi) à durcir ; et
xii) à retirer la dalle du moule.

10. Procédé selon la revendication 9 comprenant en outre une étape consistant à ajouter un revêtement antidérapant à la surface supérieure, de préférence où le revêtement antidérapant est un matériau à particules fines tel que du sable ou des grains.
